(19) Europäisches Patentamt
European Patent Office
Office européen des brevets

(11) EP 1 499 657 B1

(12) EUROPÄISCHE PATENTSCHRIFT

(45) Veröffentlichungstag und Bekanntmachung des Hinweises auf die Patenterteilung:
**16.01.2008 Patentblatt 2008/03**

(21) Anmeldenummer: **03717299.6**

(22) Anmeldetag: **14.04.2003**

(51) Int Cl.:
*C08G 69/04* (2006.01) *C08G 69/14* (2006.01)
*C08G 69/48* (2006.01) *C08F 299/02* (2006.01)

(86) Internationale Anmeldenummer:
**PCT/EP2003/003830**

(87) Internationale Veröffentlichungsnummer:
**WO 2003/087193 (23.10.2003 Gazette 2003/43)**

# (54) INHÄRENT VERNETZBARE POLYAMIDE

INHERENTLY CROSS-LINKABLE POLYAMIDES

POLYAMIDES INTRINSEQUEMENT RETICULABLES

(84) Benannte Vertragsstaaten:
**AT BE BG CH CY CZ DE DK EE ES FI FR GB GR HU IE IT LI LU MC NL PT RO SE SI SK TR**

(30) Priorität: **18.04.2002 DE 10217433**

(43) Veröffentlichungstag der Anmeldung:
**26.01.2005 Patentblatt 2005/04**

(73) Patentinhaber: **BASF Aktiengesellschaft**
**67056 Ludwigshafen (DE)**

(72) Erfinder:
- **WINTERLING, Helmut**
  **67061 Ludwigshafen (DE)**
- **DEININGER, Jürgen**
  **68723 Oftersheim (DE)**
- **KREMPEL, Kurt**
  **67127 Rödersheim-Gronau (DE)**

(56) Entgegenhaltungen:
**EP-A- 0 147 267** **DE-A- 1 917 798**

- **PATENT ABSTRACTS OF JAPAN vol. 014, no. 526 (C-0779), 19. November 1990 (1990-11-19) & JP 02 218711 A (SHOWA HIGHPOLYMER CO LTD), 31. August 1990 (1990-08-31)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 499 657 B1

## Beschreibung

Die vorliegende Erfindung betrifft ein Polyamid, das eine an das Ende der Polymerkette chemisch gebundene monoolefinisch ungesättigte Verbindung enthält.

Ferner betrifft sie ein Verfahren zur Herstellung eines solchen Polyamids, ein durch Vernetzung eines solchen Polyamids erhältliches Polyamid, sowie Fasern, Folien und Formkörper, enthaltend mindestens ein solches Polyamid.

Polyamide, insbesondere Polyamid 6 und Polyamid 6.6, sind technisch bedeutsame Polymere. Zu ihrer Herstellung setzt man üblicherweise geeignete Monomere, wie Caprolactam, Adipinsäure oder Hexamethylendiamin, in Gegenwart von Wasser um.

Ohne weitere Maßnahmen erhält man dabei die Polyamide, die bei nachgeschalteten Verarbeitungsschritten, wie Spritzguß, zu einem unkontrollierten Molekulargewichts-Aufbau neigen und damit die Verarbeitungseigenschaften verschlechtern. Insbesondere kommt es zu einer Erhöhung der Schmelzviskosität (bestimmt als Abnahme der Schmelze-Volumen-Fließrate gemäß EN ISO 1133), die beispielsweise im Spritzguß zu einer Verlängerung der Zykluszeit führt.

Zur Stabilisierung des Polyamids gegen einen solchen unkontrollierten Molekulargewichts-Aufbau werden üblicherweise Kettenregler bei der Herstellung des Polymers eingesetzt, beispielsweise Propionsäure.

Derartige Kettenregler können den Molekulargewichts-Aufbau zwar weitgehend unterdrücken; es ist allerdings wünschenswert, zur Verkürzung der Zykluszeiten im Spritzguß die Schmelze-Volumen-Fließrate gemäß EN ISO 1133 von Polyamiden bei gleicher relativer Viskosität, bestimmt gemäß DIN 51562-1 bis -4, zu erhöhen.

Aus EP-A 0 147 267 sind Polyamide mit terminalen ungesättigten Gruppen bekannt, die durch Polymerisation von 11-Amino-undecansäure mit Crotonsäure oder Undecensäure hergestellt werden.

Aus Patent Abstracts of Japan vol. 014, no. 526 (C-0779), 19. November 1990 (1990-11-19) & JP 02 218711 A ist ein Oligomer bekannt, aus dem Polyamid-Duroplasten gewonnen werden, welches durch Reaktion von (A) aromatischem Diamin, (B) aliphatischem Monoamin mit einer terminalen ungesättigten Gruppe und (C) aromatischem Disäurechlorid hergestellt wird.

Der vorliegenden Erfindung lag die Aufgabe zugrunde, ein Verfahren bereitzustellen, das die Herstellung eines Polyamids, das gegenüber nach üblichen Verfahren kettengeregelten Polyamiden bei gleicher relativer Viskosität, bestimmt gemäß DIN 51562-1 bis -4, eine höhere Schmelze-Volumen-Fließrate gemäß EN ISO 1133 auf technisch einfache und wirtschaftliche Weise ermöglicht.

Demgemäß wurde das eingangs definierte Polyamid, Verfahren zu seiner Herstellung, ein durch Vernetzung eines solchen Polyamids erhältliches Polyamid, sowie Fasern, Folien und Formkörper, enthaltend mindestens ein solches Polyamid, gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ® Faser, US-A-3,287,324) oder Poly-paraphenylen-terephthalamid (KEVLAR ® Faser, US-A-3,671,542).

Die Herstellung von Polyamiden kann prinzipiell nach zwei Verfahren erfolgen.

Bei der Polymerisation von Dicarbonsäuren und Diaminen, wie auch bei der Polymerisation von Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation von Aminocarbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Bei der Polymerisation von Aminocarbonsäureestern reagieren die Amino- und Ester-Endgruppen der Ausgangsmonomere oder Ausgangsoligomere miteinander unter.Bildung einer Amid-Gruppe und Alkohol. Der Alkohol kann anschließend von der Polymermasse entfernt werden. Bei der Polymerisation von Aminocarbonsäurenitrilen können die Nitrilgruppen zunächst mit Wasser zu Amid- oder Carbonsäuregruppen und die entstandenen Aminocarbonsäureamide oder Aminocarbonsäuren wie beschrieben umgesetzt werden. Diese Polymerisationsreaktion bezeichnet man üblicherweise als Polykondensation.

Die Polymerisation von Lactamen als Ausgangsmonomeren oder Ausgangsoligomeren bezeichnet man üblicherweise als Polyaddition.

Solche Polyamide können nach an sich bekannten Verfahren, wie sie beispielsweise in DE-A-14 95 198, DE-A-25 58 480, EP-A-129 196 oder in: Polymerization Processes, Interscience, New York, 1977, S. 424-467, insbesondere S. 444-446, beschrieben sind, erhalten werden aus Monomeren ausgewählt aus der Gruppe bestehend aus Lactamen, omega-Aminocarbonsäuren, omega-Aminocarbonsäurenitrilen, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere.

Als Monomere kommen

Monomere oder Oligomere eines $C_2$ - bis $C_{20}$ - vorzugsweise $C_2$ - bis $C_{18}$ - arylaliphatischen oder vorzugsweise aliphatischen Lactams , wie Enantholactam, Undecanolactam, Dodecanolactam oder Caprolactam,

Monomere oder Oligomere von $C_2$ - bis $C_{20}$ -, vorzugsweise $C_3$ - bis $C_{18}$ - Aminocarbonsäuren, wie 6-Aminocapronsäure, 11-Aminoundecansäure, sowie deren Salze, wie Alkalisalze, beispielsweise Lithium-, Natrium-, Kalium-Salze,

Monomere oder Oigomere von $C_2$ - bis $C_{20}$ -, vorzugsweise $C_3$ - bis $C_{18}$ - Aminocarbonsäurenitrilen, wie 6-Aminocapronitril, 11-Aminoundecansäurenitril,

Monomere oder Oligomere von $C_2$ - bis $C_{20}$ - Aminosäuramiden, wie 6-Aminocapronsäureamid, 11-Aminoundecansäureamid,

Ester, vorzugsweise $C_1$-$C_4$-Alkylester, wie Methyl-, Ethyl-, n-Propyl-, i-Propyl-, n-Butyl-, i-Butyl-, s-Butyl-ester, von $C_2$ - bis $C_{20}$ -, vorzugsweise $C_3$ - bis $C_{18}$ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,

Monomere oder Oligomere eines $C_2$ - bis $C_{20}$ -, vorzugsweise $C_2$ - bis $C_{12}$ - Alkyldiamins, wie Tetramethylendiamin oder vorzugsweise Hexamethylendiamin,

mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

Monomere oder Oligomere eines $C_6$ - bis $C_{20}$ -, vorzugsweise $C_6$- bis $C_{10}$ - aromatischen Diamins, wie m- oder p-Phenylendiamin,

mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

Monomere oder Oligomere eines $C_6$ - bis $C_{20}$ - vorzugsweise $C_6$ - bis $C_{10}$ - aromatischen Diamins, wie m- oder p-Phenylendiamin,

mit einer $C_8$ - bis $C_{20}$ -, vorzugsweise $C_8$ - bis $C_{12}$ - aromatischen Dicarbonsäure oder deren Derivate , beispielsweise Chloride, wie 2,6-Naphthalindicarbonsäure, vorzugsweise Isophthalsäure oder Terephthalsäure,

Monomere oder Oligomere eines $C_6$ - bis $C_{20}$ - vorzugsweise $C_6$ - bis $C_{10}$ - aromatischen Diamins, wie m- oder p-Phenylendiamin,

mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

Monomere oder Oligomere eines $C_7$ - bis $C_{20}$ -, vorzugsweise $C_8$ - bis $C_{18}$ - arylaliphatischen Diamins, wie m- oder

p-Xylylendiamin,

mit einer $C_2$ - bis $C_{20}$ -, vorzugsweise $C_2$ - bis $C_{14}$ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,

Monomere oder Oligomere eines $C_7$ - bis $C_{20}$ -, vorzugsweise $C_8$ - bis $C_{18}$ - arylaliphatischen Diamins, wie m- oder p-Xylylendiamin,

mit einer $C_6$ - bis $C_{20}$ -, vorzugsweise $C_6$ - bis $C_{10}$ - aromatischen Dicarbonsäure oder deren Derivate , beispielsweise Chloride, wie 2,6-Naphthalindicarbonsäure, vorzugsweise Isophthalsäure oder Terephthalsäure,

Monomere oder Oligomere eines $C_7$ - bis $C_{20}$ -, vorzugsweise $C_8$ - bis $C_{18}$ - arylaliphatischen Diamins, wie m- oder p-Xylylendiamin,

mit einer $C_9$ - bis $C_{20}$ -, vorzugsweise $C_9$ - bis $C_{18}$ - arylaliphatischen Dicarbonsäure oder deren Derivate, beispielsweise Chloride, wie o-, m- oder p-Phenylendiessigsäure,

sowie Homopolymere, Copolymere, Mischungen und Pfropfungen solcher Ausgangsmonomere oder Ausgangsoligomere in Betracht.

Als Oligomere können insbesondere die Dimeren, Trimeren, Tetrameren, Pentamere oder Hexameren der genannten Monomere oder von Gemischen solcher Monomere eingesetzt werden.

In einer bevorzugten Ausführungsform setzt man als Lactam Caprolactam, als Diamin Tetramethylendiamin, Hexamethylendiamin oder deren Gemische und als Dicarbonsäure Adipinsäure, Sebacinsäure, Dodecandisäure, Terephthalsäure, Isophthalsäure oder deren Gemische ein. Besonders bevorzugt ist als Lactam Caprolactam, als Diamin Hexamethylendiamin und als Dicarbonsäure Adipinsäure oder Terephthalsäure oder deren Gemische.

Besonders bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 6,12, Nylon 7, Nylon 11, Nylon 12 oder den Aramiden Poly-metaphenylen-isophthalamid oder Poly-paraphenylen-terephthalamid, insbesondere zu Nylon 6 oder Nylon 66, führen.

In einer bevorzugten Ausführungsform kann man bei der Herstellung der Polyamide einen oder mehrere Kettenregler einsetzen. Als Kettenregler kommen vorteilhaft Verbindungen in Betracht, die eine oder mehrere, wie zwei, drei oder vier, im Falle von Systemen in Form von Fasern bevorzugt zwei, bei der Polyamidbildung reaktive Amino-Gruppen oder eine oder mehrere, wie zwei, drei oder vier, im Falle von Systemen in Form von Fasern bevorzugt zwei, bei der Polyamidbildung reaktive Carboxyl-Gruppen aufweisen.

Im ersten Fall erhält man Polyamide, bei denen die zur Herstellung des Polyamids eingesetzten Monomere und Kettenregler eine höhere Zahl an zur Bildung der Polymerkette eingesetzten Amin-Gruppen oder deren Äquivalente als zur Bildung der Polymerkette eingesetzte Carbonsäure-Gruppen oder deren Äquivalente aufweisen.

Im zweiten Fall erhält man Polyamide, bei denen die zur Herstellung des Polyamids eingesetzten Monomere und Kettenregler eine höhere Zahl an zur Bildung der Polymerkette eingesetzten Carbonsäure-Gruppen oder deren Äquivalente als zur Bildung der Polymerkette eingesetzte Amin-Gruppen oder deren Äquivalente aufweisen.

Als Kettenregler können vorteilhaft Monocarbonsäuren, wie Alkancarbonsäuren, beispielsweise Essigsäure, Propionsäure, wie Benzol- oder Naphthalinmonocarbonsäure, beispielsweise Benzoesäure, Dicarbonsäuren, wie $C_4$-$C_{10}$-Alkandicarbonsäure, beispielsweise Adipinsäure, Azelainsäure, Sebacinsäure, Dodecandisäure, $C_5$-$C_8$-Cycloalkandicarbonsäuren, beispielsweise Cyclohexan-1,4-dicarbonsäure, Benzol- oder Naphthalindicarbonsäure, beispielsweise Terephthalsäure, Isophthalsäure, Naphthalin-2,6-dicarbonsäure, $C_2$ - bis $C_{20}$ -, vorzugsweise $C_2$ - bis $C_{12}$ - Alkylamine, wie Cyclohexylamin, $C_6$ - bis $C_{20}$ -, vorzugsweise $C_6$ - bis $C_{10}$ - aromatische Monoamine, wie Anilin, oder $C_7$ - bis $C_{20}$ -, vorzugsweise $C_8$ - bis $C_{18}$ - arylaliphatische Monoamine, wie Benzylamin, Diamine, wie $C_4$-$C_{10}$-Alkandiamine, beispielsweise Hexamethylendiamin eingesetzt werden.

Die Kettenregler können unsubstituiert oder substituiert sein, beispielsweise durch aliphatische Gruppen, vorzugsweise $C_1$-$C_8$-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =0, $C_1$-$C_8$-Alkoxy, COOH, $C_2$-$C_6$-Carbalkoxy, $C_1$-$C_{10}$-Acyloxy, oder $C_1$-$C_8$-Alkylamino, Sulfonsäure oder deren Salze, wie Alkali- oder Erdalkalisalze, Cyano, oder Halogene, wie Fluor, Chlor, Brom. Beispiele für substituierte Kettenregler sind Sulfoisophthalsäure, deren Alkali- oder Erdalkalisalze, wie Lithium-, Natrium oder Kalium-Salze, Sulfoisophthalsäureester, beispielsweise mit $C_1$-$C_{16}$-Alkanolen, oder Sulfoisophthalsäuremono-oder diamide, insbesondere mit zur Bildung von Polyamiden geeigneten, mindestens eine Amingruppe tragenden Monomeren, wie Hexamethylendiamin oder 6-Aminocapronsäure.

Bevorzugt kommen als Kettenregler sterisch gehinderte Piperidin-Derivate der Formel

wobei

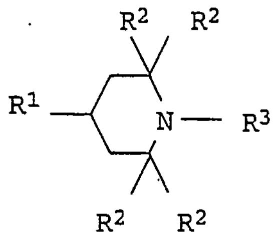

$R^1$ für eine funktionelle Gruppe steht, die zur Amidbildung gegenüber der Polymerkette des Polyamids fähig ist, vorzugsweise eine Gruppe -(NH)$R^5$, wobei $R^5$ für Wasserstoff oder $C_1$-$C_8$-Alkyl steht, oder eine Carboxylgruppe oder ein Carboxylderivat oder eine Gruppe -$(CH_2)_x$(NH)$R^5$, wobei X für 1 bis 6 steht und R5 für Wasserstoff oder $C_1$-$C_8$-Alkyl steht, oder eine Gruppe -$(CH_2)_y$COOH, wobei Y für 1 bis 6 steht, oder ein -$(CH_2)_y$COOH Säurederivat, wobei Y für 1 bis 6 steht, insbesondere für eine Gruppe -$NH_2$ steht,

$R^2$ für eine Alkylgruppe steht, vorzugsweise eine $C_1$-$C_4$-Alkylgruppe, wie Methyl, Ethyl, n-Propyl, i-Propyl, n-Butyl, i-Butyl, s-Butyl, s-Butyl, insbesondere eine Methylgruppe,

$R^3$ für Wasserstoff, $C_1$-$C_4$-Alkyl oder O-$R^4$ steht, wobei $R^4$ für Wasserstoff oder $C_1$-$C_7$ Alkyl steht, insbesondere $R^3$ für Wasserstoff steht,

in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2 ,2,6, 6-Tetramethylpiperidin.

Vorteilhaft kann man einen Kettenregler in Mengen von mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, einsetzen.

Vorteilhaft kann man einen Kettenregler in Mengen von höchstens 2,0 Mol-%, vorzugsweise höchstens 1 Mol-%, insbesondere höchstens 0,6 Mol-%, besonders bevorzugt höchstens 0,5 Mol-%, bezogen auf 1 Mol Säureamidgruppen des Polyamids, einsetzen.

Erfindungsgemäß enthält das Polyamid eine an das Ende der Polymerkette chemisch gebundene monoolefinisch ungesättigte Verbindung.

Im Sinne der vorliegenden Erfindung wird unter dem Begriff monoolefinisch ungesättigte Verbindung auch Gemische solcher monoolefinisch ungesättigter Verbindungen verstanden.

Als monoolefinisch ungesättigte Verbindung kommt vorteilhaft eine monoolefinisch ungesättigte Monocarbonsäure in Betracht.

Als monoolefinisch ungesättigte Verbindung kommt vorteilhaft ein monoolefinisch ungesättigtes Monoamin in Betracht.

Vorteilhaft kann als monoolefinisch ungesättigte Verbindung eine terminal olefinisch ungesättigte Verbindung eingesetzt werden.

Im Falle einer monoolefinisch ungesättigten Monocarbonsäure als monoolefinisch ungesättigte Verbindung kommt inbesondere eine terminal olefinisch ungesättigte, lineare, unverzweigte Alkenmonocarbonsäure, besonders bevorzugt eine solche der Formel

$$CH_2 = CH - (CH_2)_n - COOH$$

mit n = 1, 2, 3, 4, 5, 6, 7, 8, 9, 10, 11, 12, insbesondere n = 3 in Betracht.

Solche monoolefinisch ungesättigten Monocarbonsäuren und deren Herstellung sind an sich bekannt.

Solche monoolefinisch ungesättigten Monoamine und deren Herstellung sind an sich bekannt.

Vorteilhaft kann der Gehalt an monoolefinisch ungesättigter Verbindung mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, betragen.

Vorteilhaft kann der Gehalt an monoolefinisch ungesättigter Verbindung höchstens 2,0 Mol-%, vorzugsweise

höchstens 1 Mol-%, insbesondere höchstens 0,6 Mol-%, besonders bevorzugt höchstens 0,5 Mol-%, bezogen auf 1 Mol Säureamidgruppen des Polyamids, betragen.

Die erfindungsgemäßen Polyamide sind erhältlich, indem man die Umsetzung von zur Bildung eines Polyamids geeigneten Monomeren, Oligomeren oder deren Gemische zu einem Polyamid in Gegenwart einer monoolefinisch ungesättigten Verbindung oder einer Verbindung, aus der die monoolefinisch ungesättigte Verbindung unter den Reaktionsbedingungen zur Herstellung des Polyamids freigesetzt wird, durchführt.

Als Verbindung, aus der die monoolefinisch ungesättigte Monocarbonsäure unter den Reaktionsbedingungen zur Herstellung des Polyamids freigesetzt wird, kommen solche Verbindungen in Betracht, in denen die olefinische Doppelbindung unter den Reaktionsbedingungen freigesetzt wird, beispielsweise Aminosäuren, die unter Abspaltung von Ammoniak die entsprechende monoolefinisch ungesättigte Monocarbonsäure bilden, oder Hydroxysäuren, die unter Abspaltung von Wasser die entsprechende monoolefinisch ungesättigte Monocarbonsäure bilden, wobei im Falle der bevorzugten terminalen olefinisch ungesättigten Monocarbonsäuren insbesondere die endständigen Amino- bzw. Hydroxy-Verbindungen bevorzugt sind, oder solche Verbindungen, in denen die Carbonsäuregruppe unter den Reaktionsbedingungen freigesetzt wird, wie Nitrile, Ester oder Amide. Weiterhin kommen als Verbindung, aus der die monoolefinisch ungesättigte Monocarbonsäure unter den Reaktionsbedingungen zur Herstellung des Polyamids freigesetzt wird, solche Verbindungen in Betracht, in denen sowohl die olefinische Doppelbindung, als auch die Carbonsäuregruppe unter den Reaktionsbedingungen freigesetzt wird, wie Aminonitrile, Aminosäureester, Aminosäureamide, Hydroxysäurenitrile, Hydroxysäureester oder Hydroxysäureamide.

Als Verbindung, aus der die monoolefinisch ungesättigten Monoamine unter den Reaktionsbedingungen zur Herstellung des Polyamids freigesetzt wird, kommen solche Verbindungen in Betracht, in denen die olefinische Doppelbindung unter den Reaktionsbedingungen freigesetzt wird, beispielsweise Diamine, die unter Abspaltung von Ammoniak das entsprechende monoolefinisch ungesättigte Monoamine bilden, oder Hydroxyamine, die unter Abspaltung von Wasser das entsprechende monoolefinisch ungesättigte Monoamin bilden, wobei im Falle der bevorzugten terminalen olefinisch ungesättigten Monoamine insbesondere die endständigen Amino- bzw. Hydroxy-Verbindungen bevorzugt sind, oder solche Verbindungen, in denen die Amingruppe unter den Reaktionsbedingungen freigesetzt wird, wie Amide. Weiterhin kommen als Verbindung, aus der das monoolefinisch ungesättigte Monoamin unter den Reaktionsbedingungen zur Herstellung des Polyamids freigesetzt wird, solche Verbindungen in Betracht, in denen sowohl die olefinische Doppelbindung, als auch die Amingruppe unter den Reaktionsbedingungen freigesetzt wird, wie Diaminomonoamide oder Hydroxyaminoamide.

Zur Herstellung der erfindungsgemäßen Polyamide können die für die Herstellung von. Polyamiden aus den entsprechenden Monomeren üblichen Verfahrensbedingungen angewendet werden, wie sie beispielsweise in DE-A-14 95 198, DE-A-25 58 480, EP-A-129 196, DE-A-19 709 390, DE-A-35 34 817, WO 99/38908 WO 99/43734, WO 99/43732, WO 00/24808, WO 01/56984 oder in Polymerization Processes, Interscience, New.York, 1977, S. 424-467, insbesondere S. 444-446, beschrieben sind.

In einer bevorzugten Ausgestaltung kann man die Polymerisation bzw. Polykondensation nach dem erfindungsgemäßen Verfahren in Gegenwart mindestens eines Pigments durchführen. Bevorzugte Pigmente sind Titandioxid, vorzugsweise in der Anatas- oder der Rutil-Kristallform, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden.

Aus den erfindungsgemäßen Polyamiden können durch Verknüpfung gezielt höhermolekulare Polyamide erhalten werden. Besonders vorteilhaft kommt dabei die Bildung von hochmolekularen linearen Polyamiden in Betracht. Weiterhin kommt dabei besonders vorteilhaft die Bildung von dreidimensional vernetzten Polyamiden in Betracht.

Die Vernetzung kann nach an sich für die Polymerisation olefinisch ungesättigter Verbindungen bekannten Verfahren erfolgen, beispielsweise durch Zugabe geeigneter Initiatoren oder durch Bestrahlen mit UV-Licht.

Die erfindungsgemäßen Polyamide, sowie deren Vernetzungsprodukte können vorteilhaft zur Herstellung von Fasern, Folien und Formkörper , die ein solches Polyamid enthalten, insbesondere aus einem solchen Polyamid bestehen, eingesetzt werden.

## Beispiele

In den Beispielen wurde die Lösungsviskosität als relative Lösungsviskosität in 96%-Schwefelsäure gemessen gemäß DIN 51562-1 bis -4.

Hierbei wurde 1 g Polymer auf 100 ml Lösung eingewogen und die Durchlaufzeit in einem Ubbelohde-Viskosimeter gegen das reine Lösungsmittel gemessen.

Beispiel 1

In einem Laborautoklaven wurden 350 g (3,1 mol) Caprolactam, 35 g vollentsalztes Wasser und 0,8 g ($7*10^{-3}$ mol) 5-Hexansäure (Reinheit 99%) unter Stickstoffatmosphäre auf eine Innentemperatur von 270°C aufgeheizt, direkt im Anschluss innerhalb einer Stunde auf Normaldruck entspannt und 60 Minuten nachkondensiert und ausgefahren.

Das ausgefahrene Polyamid wurde granuliert, mit kochendem Wasser zur Entfernung von Caprolactam und Oligomeren extrahiert, anschließend im Vakuumtrockenschrank getrocknet. Das getrocknete extrahierte Granulat wurde für unterschiedliche Zeiten in der festen Phase bei 160°C getempert (5 h, 10 h, 20 h, 30 h).

Die folgende Tabelle 1 zeigt die erhaltenen relativen Lösungsviskositäten nach unterschiedlichen Temperzeiten.

Tabelle 1

| Temperzeit | 0 h | 10 | 15 h | 20 h | 30 h |
|---|---|---|---|---|---|
| Relative Lösungsviskosität | 2,42 | 2,70 | 2,79 | 2,84 | 2,98 |

Beispiel 2

Drei Polyamidproben aus Beispiel 1 wurden hinsichtlich ihres Verhaltens in der Schmelze untersucht. Hierfür wurden oszillatorische Schermessungen bei 250°C und Schmelzviskositätsmessungen gemäß ISO 11433 durchgeführt. Die Nullviskosität $è_0$, d.h. die Schmelzeviskosität unter Nullscherung, ist bei linearen Polyamiden mit Schulz-Flory-Verteilung eine Funktion der Molmasse $M_n$:

$$è_0 \sim M_n^{3,5}$$

Die Molmasse wurde mittels Lichtstreuung ermittelt. Abbildung 1 zeigt, dass die gemäß Beispiel 1 hergestellten Polyamide linear sind:

Beispiel 3

Beispiel 1 wurde in einem Druckkessel mit folgendem Ansatz wiederholt: 400 kg (3571 mol) Caprolactam, 40 kg vollentsalztem Wasser und 0,914 kg (8 mol) 5-Hexensäure. Das ausgefahrene Polyamid wurde extrahiert, getrocknet und in der festen Phase auf eine relative Lösungsviskosität von RV=2,74 getempert.

Dann wurden über einen Extruder 30 Gew.-% Glasfasern OCF 123 D 10 P (Firma OCF) und 7 Gew.-% Kautschuk Lupolen KR 1270 (Firma BASF Aktiengesellschaft) eincompoundiert (die Prozentangaben beziehen sich auf den fertigen Compound). Nach Compoundierung betrug die relative Lösungsviskosität 2,83.

Vergleichsbeispiel

Beispiel 3 wurde wiederholt mit der Abweichung, daß anstatt der 5-Hexensäure 0,592 kg (8 mol) Propionsäure eingesetzt wurde.

Nach Compoundierung betrug die relative Lösungsviskosität 2,83.

Messung der Schmelzvolumenrate (MVR) gemäß ISO 1133

An den Compounds aus Beispiel 3 und dem Vergleichsbeispiel wurden Messungen der Schmelzevolumenrate (MVR) gemäß ISO 1133 durchgeführt. Die Schmelzetemperatur betrug dabei 275°C, das Stempelgewicht 5 kg.

Abbildung 2 zeigt den Vergleich der Schmelzvolumenrate für unterschiedliche Verweilzeiten in der Schmelze.

An den Compounds aus Beispiel 3 und dem Vergleichsbeispiel wurde die Fließfähigkeit in zwei Typen von Fließspiralen (Durchmesser 1,5 mm, 2 mm) getestet. Die Temperatur der Spirale betrug 280°C. Gemessen wurde der Fließweg in cm. In der folgenden Tabelle 2 sind die Messungen zusammengestellt:

Tabelle 2

| | Beispiel 4 | Vergleichsbeispiel |
|---|---|---|
| Fließspirale (1,5 mm) | 25,9 cm | 23,8 cm |
| Fließspirale (2 mm) | 39,4 cm | 36,8 cm |

## Patentansprüche

1. Polyamid, das eine an das Ende der Polymerkette über eine Amidgruppe chemisch gebundene monoolefinisch ungesättigte Monocarbonsäure der Formel $CH_2 = CH - (CH_2)_3 - COOH$ enthält.

2. Polyamid nach Anspruch 1, wobei der Gehalt an der monoolefinsch ungesättigten Monocarbonsäure der Formel $CH_2 = CH - (CH_2)_3 - COOH$ im Bereich von 0,001 Mol-% bis 2 Mol-%, bezogen auf 1 Mol Säureamidgruppen des Polyamids, liegt.

3. Polyamid, erhältlich durch Vernetzung eines Polyamids gemäß Anspruch 1.

4. Verfahren zur Herstellung eines Polyamids, **dadurch gekennzeichnet, daß** man die Umsetzung von zur Bildung eines Polyamids geeigneten Monomeren zu einem Polyamid in Gegenwart einer monoolefinisch ungesättigten Monocarbonsäure der Formel $CH_2 = CH - (CH_2)_3 - COOH$ durchführt.

5. Verfahren zur Herstellung eines Polyamids, **dadurch gekennzeichnet, daß** man die Umsetzung von zur Bildung eines Polyamids geeigneten Oligomeren zu einem Polyamid in Gegenwart einer monoolefinisch ungesättigten Monocarbonsäure der Formel $CH_2 = CH - (CH_2)_3 - COOH$ durchführt.

6. Fasern, Folien und Formkörper, enthaltend ein Polyamid gemäß Anspruch 1 oder 2.

## Claims

1. A polyamide which comprises a monoolefinically unsaturated monocarboxylic acid of the formula $CH_2=CH-(CH_2)_3-COOH$ chemically bonded at the end of the polymer chain via an amide group.

2. The polyamide according to claim 1, where the content of the monoolefinically unsaturated monocarboxylic acid of the formula $CH_2=CH-(CH_2)_3-COOH$ is in the range from 0.001 to 2 mol%, based on 1 mole of amide groups of the polyamide.

3. A polyamide obtainable by crosslinking a polyamide according to claim 1.

4. A process for preparing a polyamide, which comprises carrying out the reaction of monomers suitable for forming a polyamide to give a polyamide in the presence of a monoolefinically unsaturated monocarboxylic acid of the formula $CH_2=CH- (CH_2)_3-COOH$.

5. A process for preparing a polyamide, which comprises carrying out the reaction of oligomers suitable for forming a polyamide to give a polyamide in the presence of a monoolefinically unsaturated monocarboxylic acid of the formula $CH_2=CH-(CH_2)_3-COOH$.

6. A fiber, a film, or a molding, comprising a polyamide according to claim 1 or 2.

## Revendications

1. Polyamide qui contient un acide monocarboxylique mono-oléfiniquement insaturé de formule $CH_2=CH-(CH_2)_3-COOH$, chimiquement lié par un groupe amide à l'extrémité de la chaîne polymère.

2. Polyamide suivant la revendication 1, la teneur en acide monocarboxylique mono-oléfiniquement insaturé de formule

$CH_2=CH-(CH_2)_3-COOH$ se situant dans la plage de 0,001% mol. à 2% mol. par rapport à un mole de groupes d'acides aminés du polyamide.

**3.** Polyamide qui peut être obtenu par réticulation d'un polyamide suivant la revendication 1.

**4.** Procédé pour la préparation d'un polyamide, **caractérisé en ce que** l'on exécute la transformation de monomères appropriés pour la formation d'un polyamide en un polyamide en présence d'un acide monocarboxylique mono-oléfiniquement insaturé de formule $CH_2=CH-(CH_2)_3-COOH$.

**5.** Procédé pour la préparation d'un polyamide, **caractérisé en ce que** l'on exécute la transformation d'oligomères appropriés pour la formation d'un polyamide en un polyamide en présence d'un acide monocarboxylique mono-oléfiniquement insaturé de formule $CH_2=CH-(CH_2)_3-COOH$.

**6.** Fibres, feuilles et corps moulés, contenant un polyamide suivant la revendication 1 ou 2.

FIG.1

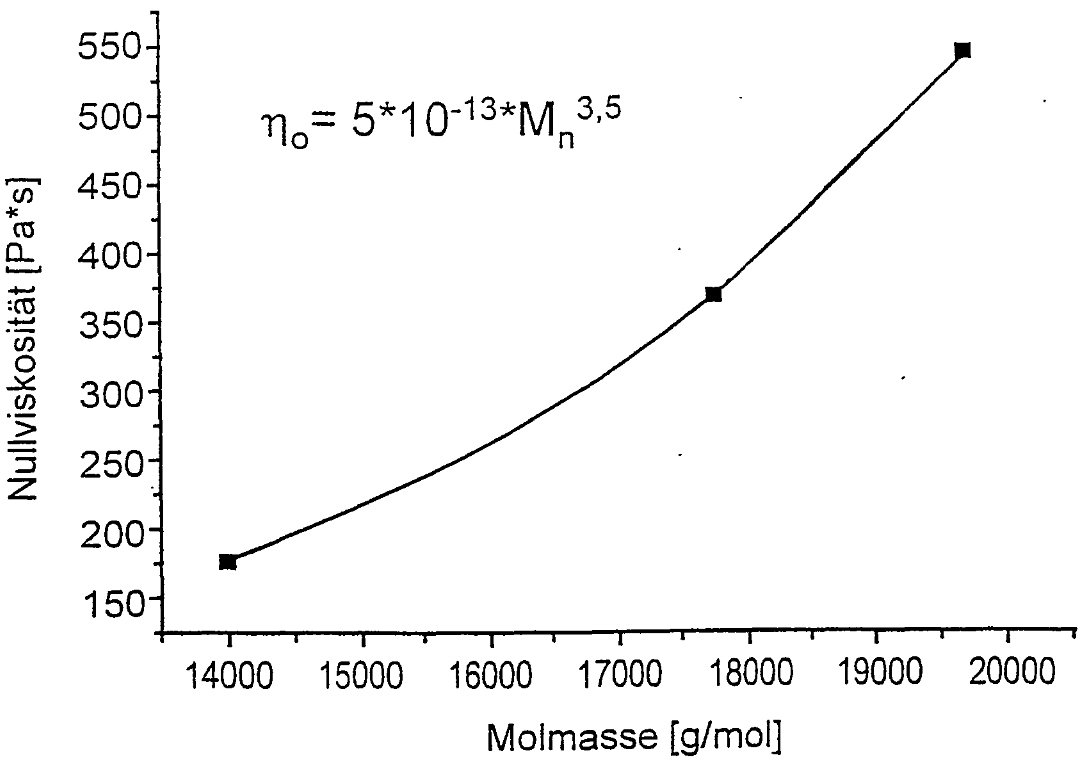
550
500
450
400
350
300
250
200
150
Nullviskosität [Pa*s]
$\eta_o = 5*10^{-13}*M_n^{3,5}$
14000
15000
16000
17000
18000
19000
20000
Molmasse [g/mol]

FIG.2

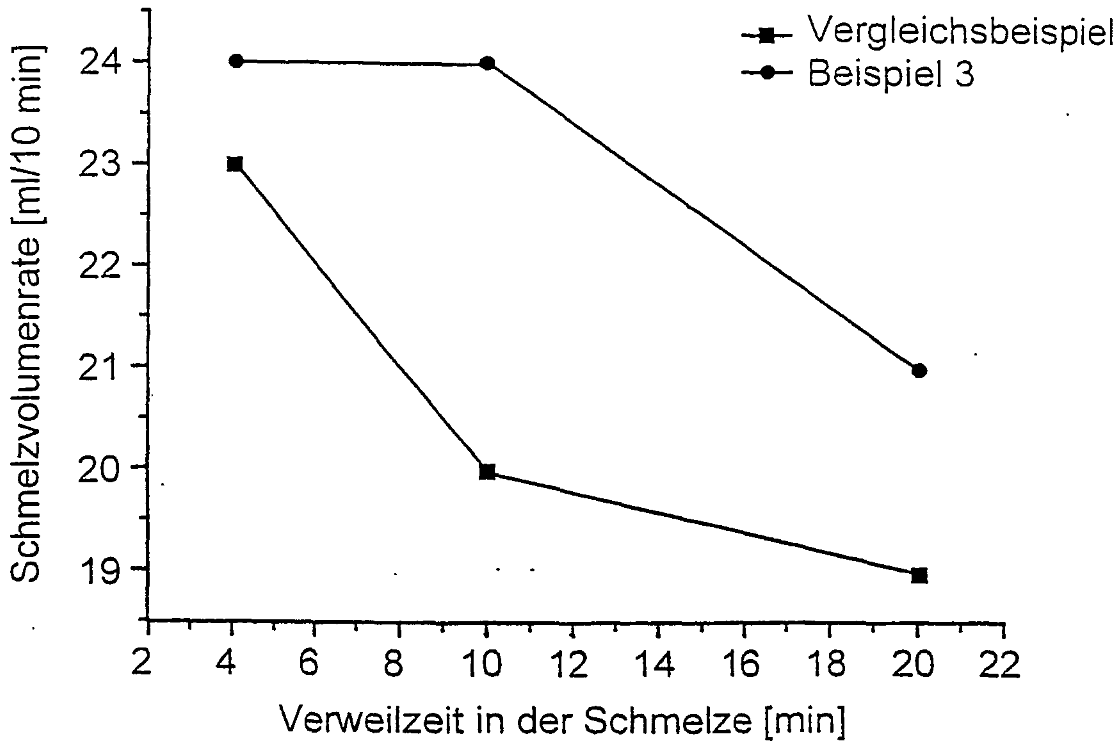
Vergleichsbeispiel
Beispiel 3
Schmelzvolumenrate [ml/10 min]
24
23
22
21
20
19
2
4
6
8
10
12
14
16
18
20
22
Verweilzeit in der Schmelze [min]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0147267 A
- JP 2218711 A
- US 3287324 A
- US 3671542 A
- DE 1495198 A
- DE 2558480 A
- EP 129196 A
- DE 19709390 A
- DE 3534817 A
- WO 9938908 A
- WO 9943734 A
- WO 9943732 A
- WO 0024808 A
- WO 0156984 A


### In der Beschreibung aufgeführte Nicht-Patentliteratur


- *PATENT ABSTRACTS OF JAPAN,* 19. November 1990, vol. 014, 526 (C-0779
- *Polymerization Processes, Interscience,* 1977, 424-467444-446